# EUROPEAN PATENT SPECIFICATION

(11) **EP 3 539 837 B1**
(45) Date of publication and mention of the grant of the patent: **19.07.2023**
(21) Application number: 18161458.7
(22) Date of filing: 13.03.2018
(51) Int. Cl.: B60W 30/095, B60W 50/00, B60W 50/14, B60W 30/09, G08G 1/16

(54) **A VEHICLE RADAR SYSTEM FOR DETECTING PRECEDING VEHICLES**
FAHRZEUGRADARSYSTEM ZUR ERKENNUNG VON VORAUSFAHRENDEN FAHRZEUGEN
SYSTÈME DE RADAR DE VÉHICULE PERMETTANT DE DÉTECTER DES VÉHICULES PRÉCÉDENTS

(43) Date of publication of application: 18.09.2019
(73) Proprietor: Veoneer Sweden AB, 447 83 Vårgårda (SE)
(72) Inventor: Laoufi, Moroine, 92400 Courbevoie (FR); Trompeter, Florian, 97762 Hammelburg (DE); Schwert, Christian, 97437 Haßfurt (DE); Bernard, Jeremy, 75019 Paris (FR)
(74) Representative: Westpatent AB

(56) References cited:
- EP-A1- 1 873 737
- DE-A1-102009 006 747
- US-A1- 2015 025 784

## Description

### DESCRIPTION OF THE INVENTION

The present invention relates to a vehicle environment detection system comprising a control unit arrangement and at least one sensor arrangement that is arranged to be mounted in an ego vehicle and to provide sensor detections for at least two preceding target vehicles.

Many vehicles comprise radar systems which are arranged for object detection, being able to provide a warning to a driver about an object in the path of a vehicle, as well as providing input to vehicle systems such as Adaptive Cruise Control (ACC) and Rear Cross Traffic Avoidance (RCTA) systems. These systems can provide both warnings and activate Autonomous Emergency Braking (AEB) to avoid a collision with an object behind a host vehicle.

Such radar systems comprise one or more forward-looking radar transceivers and one or more rearward-looking radar transceivers in an ego vehicle.

An ego vehicle can crash into a preceding vehicle if the preceding vehicle makes an unexpected deceleration or stop and/or if the driver of the ego vehicle fails to maintain a safe headway distance to the preceding vehicle. A vehicle radar can be used to detect the distance to a preceding vehicle and the relative speed between the preceding vehicle and the ego vehicle, and compute the time to collision (TTC) or the time required for the ego vehicle to reach the current position of the preceding vehicle (TTR).

If the TTC falls below a predetermined threshold value, an alarm may be issued to encourage the vehicle operator to reduce the speed. It is then also possible to activate an emergency system such as an automated brake of the ego vehicle.

A collision with a preceding vehicle can occur when a preceding vehicle collides with a further preceding vehicle traveling immediately ahead of the preceding vehicle, and the resulting sudden stopping or deceleration of the preceding vehicle can cause the ego vehicle to collide with the preceding vehicle. In such a situation, the preceding vehicle comes to a stop or decelerates so suddenly that it is extremely difficult for the ego vehicle to stop or decelerate quickly enough to avoid the collision with the preceding vehicle.

Even if the preceding vehicle does not collide with said further preceding vehicle, if said further preceding vehicle decelerates suddenly due to a need for a quick braking, the preceding vehicle may also have to brake quickly, which may be surprising to the driver of the ego vehicle. If the driver of the ego vehicle does not maintain a proper distance to the preceding vehicle, a collision can occur.

The document US 2015025784 discloses a forward collision warning system in an ego vehicle that can determine time to collision with a preceding vehicle when there is a further preceding vehicle. A radar is capable of detecting preceding vehicles such as a first preceding vehicle and a second preceding vehicle immediately preceding the first preceding vehicle.

The document US 7474253 discloses retrieving information about a vehicle in front of a preceding vehicle ahead of the ego vehicle, where correctly estimating a behavior of the vehicle in front of the preceding vehicle is used to smoothly control the speed of the ego vehicle.

The document DE 10 2009 006747 relates to detecting objects in the environment, for example two preceding vehicles, and determining the most relevant detected object in a longitudinal and/or lateral direction.

The object of the present invention is to provide a radar system that prevents collisions, in a more reliable way than previously described, in situations where there is a first preceding vehicle and at least a second preceding vehicle, where said second preceding vehicle precedes the first preceding vehicle.

This object is obtained by means of a vehicle environment detection system comprising a control unit arrangement and at least one sensor arrangement that is arranged to be mounted in an ego vehicle and to provide sensor detections for at least two preceding target vehicles. The vehicle environment detection system is arranged to acquire an ego velocity and an ego acceleration for the ego vehicle. By means of said sensor detections, the vehicle environment detection system is arranged to determine vehicle data comprising corresponding distances between the ego vehicle and said preceding target vehicles and corresponding target velocity and target acceleration for each of said preceding target vehicles. The control unit arrangement is arranged to determine a corresponding TTC (time to collision) between at least two different pairs of said vehicles, and to determine if any determined TTC falls below at least one threshold value.

This confers an advantage of being able to prevent collisions in a very reliable manner using data input from several preceding vehicles.

According to the invention, the control unit arrangement is arranged to discard each determined TTC value that corresponds to a preceding vehicle for which the corresponding distance exceeds a distance threshold value.

This confers an advantage of avoiding false alarms.

According to some aspects, the control unit arrangement is arranged to compare at least one determined TTC with a first threshold value and to initiate an alarm if said determined TTC falls below the first threshold value.

This confers an advantage of providing a first type of action for less serious situations.

According to some aspects, the control unit arrangement is arranged to compare said at least one determined TTC with a second threshold value, falling below the first threshold value, and to initiate an emergency system if said at least one determined TTC falls below the second threshold value.

This confers an advantage of providing a second type of action for more serious situations.

According to some aspects, the control unit arrangement is arranged to compare at least one determined TTC between preceding vehicles with at least one further threshold value, and to adjust at least one of said first threshold value and second threshold value accordingly.

This confers an advantage of providing adaptive thresholds.

Other examples are disclosed in the dependent claims.

There are also disclosed herein methods and computer programs associated with the above-mentioned advantages.

### BRIEF DESCRIPTION OF THE DRAWINGS

The present invention will now be described more in detail with reference to the appended drawings, where:
Figure 1 shows a schematic top view of an ego vehicle; and
Figure 2 shows a flowchart for methods according to the present invention.

### DETAILED DESCRIPTION

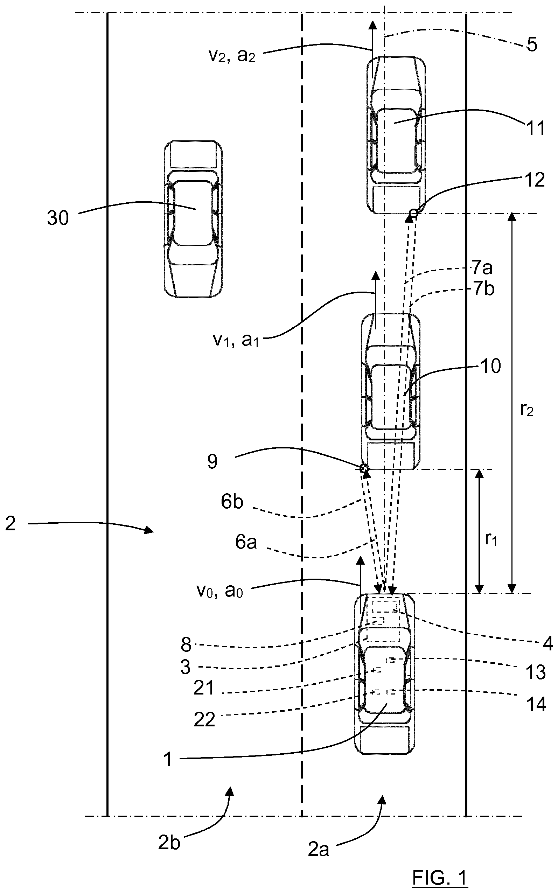

Figure 1 schematically shows a top view of an ego vehicle 1 arranged to run in a first lane 2a on a road 2, where the ego vehicle 1 comprises a vehicle radar system 3. The vehicle radar system 3 comprises a radar sensor arrangement 4 that is arranged to distinguish and/or resolve targets from the surroundings by transmitting signal 6a, 7a and receiving corresponding reflected signals 6b, 7b and using a Doppler effect in a previously well-known manner. The signals 6a, 6b; 7a, 7b are according to some aspects constituted by sweep signals in the form of FMCW (Frequency Modulated Continuous Wave) chirp signals 6 of a previously known kind.

In front of the ego vehicle 1 there is a first preceding target vehicle 10, and in front of the first preceding target vehicle 10 there is a second preceding target vehicle 11, thus preceding the first preceding target vehicle 10.

The vehicle radar system 3 further comprises a control unit arrangement 8 that is connected to the radar sensor arrangement 4 and is arranged to provide azimuth angles, distance and radial velocity of possible target object detections by simultaneously sampling and analyzing phase and amplitude of the received signals in a previously well-known manner. Azimuth angles are determined relative a radar reference line 5 that for example is constituted by a radar sensor arrangement boresight direction.

The control unit arrangement 8 is also arranged to acquire informing regarding the own vehicle's, the ego vehicle's, ego velocity v₀ and ego acceleration a₀. The control unit arrangement 8 is adapted to acquire these ego vehicle data from suitable sources, such as a speedometer arrangement 21 and an accelerometer arrangement 22 comprised in the ego vehicle 1 in a previously well-known manner.

In Figure 1, a first radar detection 9 of the first preceding target vehicle 10 and a second radar detection 12 of the second preceding target vehicle 11 are shown. The second radar detection 12 is acquired by having corresponding transmitted signals 7a and received reflected signals 7b bounced beneath the first preceding target vehicle 10. According to some aspects, the second radar detection is acquired by having corresponding transmitted signals and received reflected signals reflected at guardrails or other structures along the road 2. The reflections could be single or multiple reflections. According to some aspects, The sensor radar sensor arrangement 4 can be tilted vertically to achieve this, but it is also sufficient to have a radar sensor with a sufficient field of view in elevation direction.

For reasons of clarity, only one radar detection 9, 12 is shown for each target vehicle 10, 11; of course there can be a multitude of radar detections for each target vehicle 10, 11.

By means of the radar detections 9, 12, the vehicle radar system 3 is arranged perform tracking of the preceding vehicles 10, 11 in a well-known manner, and, in addition to said ego velocity v₀ and ego acceleration a₀, to acquire:
- a first distance r₁ between the ego vehicle 1 and the first preceding target vehicle 10;
- a first target velocity v₁ and a first target acceleration a₁ for the first preceding target vehicle 10;
- a second distance r₂ between the ego vehicle 1 and the second preceding target vehicle 11; and
- a second target velocity v₂ and a second target acceleration a₂ for the second preceding target vehicle 11.

According to the present invention, the control unit arrangement 8 is arranged to determine a corresponding TTC, time to collision, value between the ego vehicle 1 and the first preceding target vehicle 10, between the ego vehicle 1 and the second preceding target vehicle 11, and between the preceding target vehicles 11, 12.

In order to achieve this, the control unit arrangement 8 is arranged to determine a first TTC between the ego vehicle 1 and the first preceding vehicle 10 based on the ego velocity v₀, the ego acceleration a₀, the first distance r₁, the first target velocity v₁ and the first target acceleration a₁. The control unit arrangement 8 is then arranged to determine a second TTC between the ego vehicle 1 and the second preceding vehicle 11 based on the ego velocity v₀, the ego acceleration a₀, the second distance r₂, the second target velocity v₂ and the second target acceleration a₂. The control unit arrangement 8 is then arranged to determine a third TTC between the preceding vehicles 10, 11 based on the first distance r₁, the first target velocity v₁ and the first target acceleration a₁, the second distance r₂, the second target velocity v₂ and the second target acceleration a₂.

The control unit arrangement 8 is arranged to compare the determined TTC values with at least one threshold value and to initiate a proper action if any TTC falls below said threshold value.

According to some aspects, the control unit arrangement 8 is arranged to compare the determined TTC values with a first threshold value and to initiate an alarm if any TTC falls below the first threshold value. Such an alarm is intended to encourage the driver of the ego vehicle 1 to react in any suitable way, for example by appropriate steering and/or speed reduction.

According to some aspects, the control unit arrangement 8 is arranged to compare the determined TTC values with a second threshold value, falling below the first threshold value. If any TTC falls below the second threshold value, the control unit arrangement 8 is arranged to initiate an emergency system such as an automated brake of the ego vehicle 1.

For this purpose, as indicated in Figure 1, the ego vehicle 1 comprises a safety control unit 13 and safety means 14, for example comprising an emergency braking system, seatbelt pre-tensioners and an alarm signal device. The safety control unit 13 is arranged to control the safety means 14 in dependence of input from the radar system 3. Such input may be conferred via the control unit arrangement 8.

According to the invention, to avoid undesired safety means activation, a distance threshold is used. The control unit arrangement 8 is arranged to discard each TTC value from said determined TTC:s that correspond to a preceding vehicle for which the corresponding distance r₁, r₂ exceeds a distance threshold value.

This means that if the second preceding vehicle 11 suddenly brakes, and for a certain time the second TTC falls below the first threshold value or below both the first threshold value and the second threshold value, an alarm or an emergency system should be initiated according to the above. However, if the second distance r₂ exceeds said distance threshold value, the second TTC is not considered. A braking second preceding second vehicle that is relatively far away from the ego vehicle 1 does thus not have any impact on possible safety measures at the ego vehicle 1.

The present invention is also applicable for more than two preceding vehicles, but there are always at least two preceding vehicles 10, 11. Generally, the control unit arrangement 8 is arranged to determine a corresponding TTC between at least two different pairs of vehicles 1, 10, 11, and to determine if any determined TTC falls below at least one threshold value.

According to some aspects, the control unit arrangement 8 is arranged to calculate and compare TTC values between the preceding vehicles 10, 11 with a at least one further threshold value, and to adjust at least one of said first threshold value and second threshold value accordingly. This means that if two preceding vehicles have a relatively low mutual TTC, at least one of said first threshold value and second threshold value can be temporarily increased, since the risk for collision between these preceding vehicles has increased, and therefore a higher probability exists that the ego vehicle has to change its current state of driving.

In order to avoid taking a target vehicle 30 in a second lane 2b into account in the above determining of the TTC values, a path prediction based on the driving state of the ego vehicle 1 is performed. Alternatively, a lane detection based on a vision system could be used, or a combination of both. Such path prediction and lane detection is independent of in which direction such a target vehicle 30 is travelling.

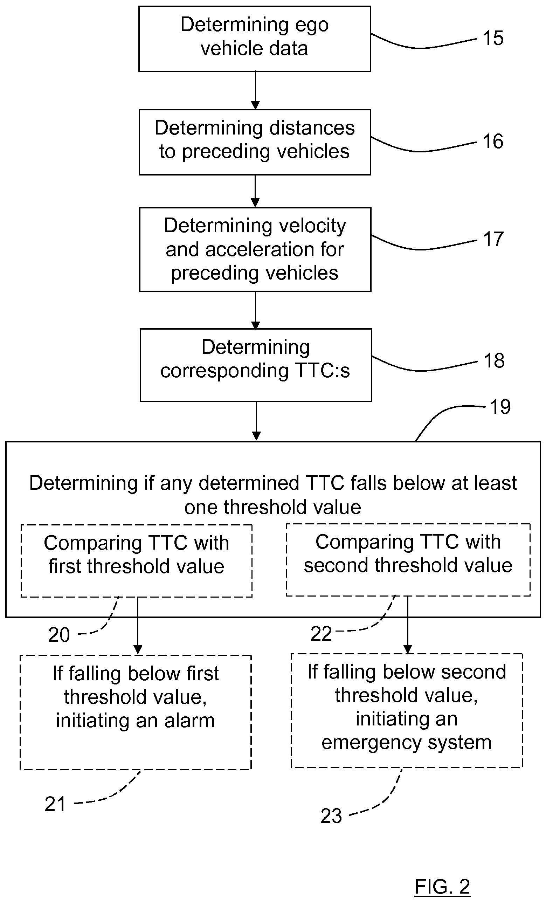

With reference to Figure 2, the present invention also relates to a method for avoiding collision between an ego vehicle 1 and a preceding target vehicle 10, wherein the method comprises:
acquiring 15 an ego velocity v₀ and an ego acceleration a₀ for the ego vehicle 1;
determining 16 vehicle data comprising corresponding distances r₁, r₂ between the ego vehicle 1 and each one of at least two preceding target vehicles 10, 11;
determining 17 vehicle data comprising corresponding target velocity v₁, v₂ and target acceleration a₁, a₂ for each one of said preceding target vehicles 10, 11;
determining 18 a corresponding TTC between at least two different pairs of said vehicles 1, 10, 11; and
determining 19 if any determined TTC falls below at least one threshold value.

According to the invention, the method comprises discarding each determined TTC value that corresponds to a preceding vehicle for which the corresponding distance r₁, r₂ exceeds a distance threshold value.

According to some aspects, the determining 19 if at least one determined TTC falls below at least one threshold value comprises comparing 20 said TTC with a first threshold value, where the method further comprises initiating 21 an alarm if said TTC falls below the first threshold value.

According to some aspects, the determining 19 if at least one determined TTC falls below at least one threshold value comprises comparing 22 said TTC with a second threshold value, falling below the first threshold value; and initiating 23 an emergency system 13, 14 if said TTC falls below the second threshold value. According to some aspects, the method further comprises comparing at least one TTC between preceding vehicles 10, 11 with at least one further threshold value; and adjusting at least one of said first threshold value and second threshold value accordingly.

The present invention is not limited to the examples above, but may vary freely within the scope of the appended claims. For example, the radar system may be implemented in any type of vehicle such as cars, trucks and buses as well as boats and aircraft.

Exactly how data processing, such as calculations and determining procedures, is accomplished in practice may vary, the example disclosed above is only an example. The control unit arrangement 8 may be comprised by one or more separate or integrated control units. The safety control unit 13 is according to some aspects comprised in the control unit arrangement 8.

In the examples discussed there is a tracked target vehicle; generally there can be any type of tracked target object such as for example a bicycle or a pedestrian.

Other kinds of FMCW signals and FMCW signal configurations are also conceivable, as well as other types of Doppler radar signals. Other types of radar systems are also conceivable; not only FMCW radar systems are conceivable. Pulse radar, FSK (frequency-shift keying) or CW (continuous wave) waveform are also conceivable like all other kinds of suitable modulation techniques.

The present invention does not only relate to vehicle radar systems but generally relates to any type of vehicle environment detection system such as ultrasonic or Lidar. The measurements can according to some aspects be performed by more than one sensor/camera or a combination of different detection systems.

Generally, the present invention relates to a vehicle environment detection system 3 comprising a control unit arrangement 8 and at least one sensor arrangement 4 that is arranged to be mounted in an ego vehicle 1 and to provide sensor detections 9, 12 for at least two preceding target vehicles 10, 11, where the vehicle environment detection system 3 is arranged to acquire an ego velocity v₀ and an ego acceleration a₀ for the ego vehicle 1, and, by means of said sensor detections 9, 12, to determine vehicle data comprising:
- corresponding distances r₁, r₂ between the ego vehicle 1 and said preceding target vehicles 10, 11; and
- corresponding target velocity v₁, v₂ and target acceleration a₁, a₂ for each of said preceding target vehicles 10, 11. The control unit arrangement 8 is arranged to determine a corresponding TTC (time to collision) between at least two different pairs of said vehicles 1, 10, 11, and to determine if any determined TTC falls below at least one threshold value.

According to the invention, the control unit arrangement 8 is arranged to discard each determined TTC value that corresponds to a preceding vehicle for which the corresponding distance r₁, r₂ exceeds a distance threshold value.

According to some aspects, the control unit arrangement 8 is arranged to compare at least one determined TTC with a first threshold value and to initiate an alarm if said determined TTC falls below the first threshold value.

According to some aspects, the control unit arrangement 8 is arranged to compare said at least one determined TTC with a second threshold value, falling below the first threshold value, and to initiate an emergency system 13, 14 if said at least one determined TTC falls below the second threshold value.

According to some aspects, the control unit arrangement 8 is arranged to compare at least one determined TTC between preceding vehicles 10, 11 with at least one further threshold value, and to adjust at least one of said first threshold value and second threshold value accordingly.

## Claims

1. A vehicle environment detection system (3) comprising a control unit arrangement (8) and at least one sensor arrangement (4) that is arranged to be mounted in an ego vehicle (1) and to provide sensor detections (9, 12) for at least two preceding target vehicles (10, 11), where the vehicle environment detection system (3) is arranged to acquire an ego velocity (v₀) and an ego acceleration (a₀) for the ego vehicle (1), and, by means of said sensor detections (9, 12), to determine vehicle data comprising:
- corresponding distances (r₁, r₂) between the ego vehicle (1) and said preceding target vehicles (10, 11); and
- corresponding target velocity (v₁, v₂) and target acceleration (a₁, a₂) for each of said preceding target vehicles (10, 11); where
the control unit arrangement (8) is arranged to determine a corresponding TTC, time to collision, between at least two different pairs of said vehicles (1, 10, 11), and to determine if any determined TTC falls below at least one threshold value, **characterized in that** the control unit arrangement (8) is arranged to discard each determined TTC value that corresponds to a preceding vehicle for which the corresponding distance (r₁, r₂) exceeds a distance threshold value.

2. The vehicle environment detection system (3) according to claim 1, **characterized in that** the control unit arrangement (8) is arranged to compare at least one determined TTC with a first threshold value and to initiate an alarm if said determined TTC falls below the first threshold value.

3. The vehicle environment detection system (3) according to claim 2, **characterized in that** the control unit arrangement (8) is arranged to compare said at least one determined TTC with a second threshold value, falling below the first threshold value, and to initiate an emergency system (13, 14) if said at least one determined TTC falls below the second threshold value.

4. The vehicle environment detection system (3) according to claim 3, **characterized in that** the control unit arrangement (8) is arranged to compare at least one determined TTC between preceding vehicles (10, 11) with at least one further threshold value, and to adjust at least one of said first threshold value and second threshold value accordingly.

5. A method for avoiding collision between an ego vehicle (1) and a preceding target vehicle (10), wherein the method comprises:
acquiring (15) an ego velocity (v₀) and an ego acceleration (a₀) for the ego vehicle (1);
determining (16) vehicle data comprising corresponding distances (r₁, r₂) between the ego vehicle (1) and each one of at least two preceding target vehicles (10, 11);
determining (17) vehicle data comprising corresponding target velocity (v₁, v₂) and target acceleration (a₁, a₂) for each one of said preceding target vehicles (10, 11);
determining (18) a corresponding TTC, time to collision, between at least two different pairs of said vehicles 1, 10, 11; and
determining (19) if any determined TTC falls below at least one threshold value, wherein the method comprises discarding each determined TTC value that corresponds to a preceding vehicle for which the corresponding distance (r₁, r₂) exceeds a distance threshold value.

6. The method according to claim 5, wherein the determining (19) if at least one determined TTC falls below at least one threshold value comprises comparing (20) said TTC with a first threshold value, where the method further comprises initiating (21) an alarm if said TTC falls below the first threshold value.

7. The method according to claim 6, wherein the determining (19) if at least one determined TTC falls below at least one threshold value comprises comparing (22) said TTC with a second threshold value, falling below the first threshold value; and initiating (23) an emergency system (13, 14) if said TTC falls below the second threshold value.

8. The method according to claim 7, wherein the method further comprises comparing at least one TTC between preceding vehicles (10, 11) with at least one further threshold value; and adjusting at least one of said first threshold value and second threshold value accordingly.

## Patentansprüche

1. Fahrzeugumfelderkennungssystem (3), umfassend eine Steuereinheitsbaugruppe (8) und mindestens eine Sensorbaugruppe (4), die dazu eingerichtet ist, in einem Ego-Fahrzeug montiert zu sein und Sensorerkennungen (9, 12) für mindestens zwei vorausfahrende Zielfahrzeuge (10, 11) bereitzustellen, wobei das Fahrzeugumfelderkennungssystem (3) dazu eingerichtet ist, eine Ego-Geschwindigkeit (v₀) und eine Ego-Beschleunigung (a₀) für das Ego-Fahrzeug (1) zu erfassen, und, mittels der Sensorerkennungen (9, 12), Fahrzeugdaten zu bestimmen, die umfassen:
- entsprechende Abstände (r₁, r₂) zwischen dem Ego-Fahrzeug (1) und den vorausfahrenden Zielfahrzeugen (10, 11); und
- eine entsprechende Zielgeschwindigkeit (v₁, v₂) und Zielbeschleunigung (a₁, a₂) für jedes der vorausfahrenden Zielfahrzeuge (10, 11); wobei
die Steuereinheitsbaugruppe (8) dazu eingerichtet ist, eine entsprechende TTC, Zeit bis zum Aufprall, zwischen mindestens zwei unterschiedlichen Paaren der Fahrzeuge (1, 10, 11)zu bestimmen, und zu bestimmen, ob eine beliebige bestimmte TTC unter mindestens einen Schwellenwert fällt, **dadurch gekennzeichnet, dass** die Steuereinheitsbaugruppe (8) dazu eingerichtet ist, jeden bestimmten TTC-Wert zu verwerfen, der einem vorausfahrenden Fahrzeug entspricht, bei dem der entsprechende Abstand (r₁, r₂) einen Abstandsschwellenwert übersteigt.

2. Fahrzeugumfelderkennungssystem (3) nach Anspruch 1, **dadurch gekennzeichnet, dass** die Steuereinheitsbaugruppe (8) dazu eingerichtet ist, mindestens eine bestimmte TTC mit einem ersten Schwellenwert zu vergleichen und einen Alarm zu initiieren, wenn die bestimmte TTC unter den ersten Schwellenwert fällt.

3. Fahrzeugumfelderkennungssystem (3) nach Anspruch 2, **dadurch gekennzeichnet, dass** die Steuereinheitsbaugruppe (8) dazu eingerichtet ist, die mindestens eine bestimmte TTC mit einem zweiten Schwellenwert zu vergleichen, der unter den ersten Schwellenwert fällt, und ein Notfallsystem (13, 14) zu initiieren, wenn die mindestens eine bestimmte TTC unter den zweiten Schwellenwert fällt.

4. Fahrzeugumfelderkennungssystem (3) nach Anspruch 3, **dadurch gekennzeichnet, dass** die Steuereinheitsbaugruppe (8) dazu eingerichtet ist, mindestens eine bestimmte TTC zwischen vorausfahrenden Fahrzeugen (10, 11) mit mindestens einem weiteren Schwellenwert zu vergleichen, und den ersten Schwellenwert und/oder den zweiten Schwellenwert entsprechend anzupassen.

5. Verfahren zum Verhindern eines Aufpralls zwischen einem Ego-Fahrzeug (1) und einem vorausfahrenden Zielfahrzeug (10), wobei das Verfahren umfasst:
Erfassen (15) einer Ego-Geschwindigkeit (v₀) und einer Ego-Beschleunigung (a₀) für das Ego-Fahrzeug (1);
Bestimmen (16) von Fahrzeugdaten, die entsprechende Abstände (r₁, r₂) zwischen dem Ego-Fahrzeug (1) und jedem von mindestens zwei vorausfahrenden Fahrzeugen (10, 11) umfassen;
Bestimmen (17) von Fahrzeugdaten, die eine entsprechende Zielgeschwindigkeit (v₁, v₂) und Zielbeschleunigung (a₁, a₂) für jedes der vorausfahrenden Zielfahrzeuge (10, 11) umfassen;
Bestimmen (18) einer entsprechenden TTC, Zeit bis zum Aufprall, zwischen mindestens zwei unterschiedlichen Paaren der Fahrzeuge 1, 10, 11; und
Bestimmen (19), ob eine beliebige bestimmte TTC unter mindestens einen Schwellenwert fällt, wobei das Verfahren Verwerfen jedes bestimmten TTC-Werts, der einem vorausfahrenden Fahrzeug entspricht, bei dem der entsprechende Abstand (r₁, r₂) einen Abstandsschwellenwert übersteigt, umfasst.

6. Verfahren nach Anspruch 5, wobei das Bestimmen (19), ob mindestens eine bestimmte TTC unter mindestens einen Schwellenwert fällt, Vergleichen (20) der TTC mit einem ersten Schwellenwert umfasst, wobei das Verfahren ferner Initiieren (21) eines Alarms, wenn die TTC unter den ersten Schwellenwert fällt, umfasst.

7. Verfahren nach Anspruch 6, wobei das Bestimmen (19), ob mindestens eine bestimmte TTC unter mindestens einen Schwellenwert fällt, Vergleichen (22) der TTC mit einem zweiten Schwellenwert, der unter den ersten Schwellenwert fällt; und Initiieren (23) eines Notfallsystems (13, 14), wenn die TTC unter den zweiten Schwellenwert fällt, umfasst.

8. Verfahren nach Anspruch 7, wobei das Verfahren ferner Vergleichen mindestens einer TTC zwischen vorausfahrenden Fahrzeugen (10, 11) mit mindestens einem weiteren Schwellenwert; und entsprechendes Anpassen des ersten Schwellenwerts und/oder des zweiten Schwellenwerts umfasst.

## Revendications

1. Système de détection d'environnement de véhicule (3), comprenant un agencement d'unité de commande (8) et au moins un agencement de capteur (4) qui est agencé pour être monté dans un ego-véhicule (1) et pour fournir des détections de capteur (9, 12) pour au moins deux véhicules cibles précédents (10, 11), où le système de détection d'environnement de véhicule (3) est agencé pour acquérir une ego-vitesse (v₀) et une ego-accélération (a₀) pour l'ego-véhicule (1), et, au moyen desdites détections de capteur (9, 12), pour déterminer des données de véhicule comprenant :
- des distances correspondantes (r₁, r₂) entre l'ego-véhicule (1) et lesdits véhicules cibles précédents (10, 11) ; et
- une vitesse cible (v₁, v₂) et une accélération cible (a₁, a₂) correspondantes pour chacun desdits véhicules cibles précédents (10, 11) ; où l'agencement d'unité de commande (8) est agencé pour déterminer un temps avant collision, TTC, correspondant, entre au moins deux différentes paires desdits véhicules (1, 10, 11), et pour déterminer qu'un quelconque TTC déterminé est ou non inférieur à au moins une valeur seuil, **caractérisé en ce que** l'agencement d'unité de commande (8) est agencé pour rejeter chaque valeur de TTC déterminé qui correspond à un véhicule précédent pour lequel la distance correspondance (r₁, r₂) dépasse une valeur seuil de distance.

2. Système de détection d'environnement de véhicule (3) selon la revendication 1, **caractérisé en ce que** l'agencement d'unité de commande (8) est agencé pour comparer au moins un TTC déterminé à une première valeur seuil et pour déclencher une alarme si ledit TTC déterminé est inférieur à la première valeur seuil.

3. Système de détection d'environnement de véhicule (3) selon la revendication 2, **caractérisé en ce que** l'agencement d'unité de commande (8) est agencé pour comparer ledit au moins un TTC déterminé à une seconde valeur seuil, inférieure à la première valeur seuil, et pour déclencher un système d'urgence (13, 14) si ledit au moins un TTC déterminé est inférieur à la seconde valeur seuil.

4. Système de détection d'environnement de véhicule (3) selon la revendication 3, **caractérisé en ce que** l'agencement d'unité de commande (8) est agencé pour comparer au moins un TTC déterminé entre des véhicules précédents (10, 11) à au moins une valeur seuil supplémentaire, et pour ajuster au moins une desdites première valeur seuil et seconde valeur seuil en conséquence.

5. Procédé pour éviter une collision entre un ego-véhicule (1) et un véhicule cible précédent (10), dans lequel le procédé comprend :
l'acquisition (15) d'une ego-vitesse (v₀) et d'une ego-accélération (a₀) pour l'ego-véhicule (1) ;
la détermination (16) de données de véhicule comprenant des distances correspondantes (r₁, r₂) entre l'ego-véhicule (l) et chacun d'au moins deux véhicules cibles précédents (10, 11) ;
la détermination (17) de données de véhicule comprenant une vitesse cible (v₁, v₂) et une accélération cible (a₁, a₂) correspondantes pour chacun desdits véhicules cibles précédents (10, 11) ;
la détermination (18) d'un temps avant collision, TTC, correspondant, entre au moins deux différentes paires desdits véhicules (1, 10, 11) ; et
la détermination (19) qu'un quelconque TTC déterminé est ou non inférieur à au moins une valeur seuil, dans lequel le procédé comprend le rejet de chaque valeur de TTC déterminé qui correspond à un véhicule précédent pour lequel la distance correspondance (r₁, r₂) dépasse une valeur seuil de distance.

6. Procédé selon la revendication 5, dans lequel la détermination (19) qu'au moins un TTC déterminé est inférieur ou non à au moins une valeur seuil comprend la comparaison (20) dudit TTC à une première valeur seuil, où le procédé comprend en outre le déclenchement (21) d'une alarme si ledit TTC est inférieur à la première valeur seuil.

7. Procédé selon la revendication 6, dans lequel la détermination (19) qu'au moins un TTC déterminé est ou non inférieur à au moins une valeur seuil comprend la comparaison (22) dudit TTC à une seconde valeur seuil, inférieure à la première valeur seuil ; et le déclenchement (23) d'un système d'urgence (13, 14) si ledit TTC est inférieur à la seconde valeur seuil.

8. Procédé selon la revendication 7, dans lequel le procédé comprend en outre la comparaison d'au moins un TTC entre des véhicules précédents (10, 11) à au moins une valeur seuil supplémentaire ; et l'ajustement d'au moins une desdites première valeur seuil et seconde valeur seuil en conséquence.
